# EUROPÄISCHE PATENTSCHRIFT

(11) **EP 1 278 705 B1**
(45) Veröffentlichungstag und Bekanntmachung des Hinweises auf die Patenterteilung: **09.11.2005**
(21) Anmeldenummer: 01980414.5
(22) Anmeldetag: 20.09.2001
(51) Int. Cl.: C03B 9/16, C03B 9/353

(54) **VORRICHTUNG ZUM SCHLIESSEN UND ÖFFNEN VON FORMHÄLFTEN EINER GLASFORMMASCHINE**
DEVICE FOR CLOSING AND OPENING THE MOULD HALVES OF A GLASS MOULDING MACHINE
DISPOSITIF POUR FERMER ET OUVRIR DES DEMI-MOULES D'UNE MACHINE A MOULER LE VERRE

(30) Priorität: 06.12.2000 DE 20020657 U
(43) Veröffentlichungstag der Anmeldung: 29.01.2003
(73) Patentinhaber: Heye International GmbH, 31683 Obernkirchen (DE)
(72) Erfinder: BÖGERT, Hermann, D-31749 Auetal (DE); DRAWERT, Manfred, D-31688 Nienstädt (DE)
(74) Vertreter: Callies, Rainer Michael
(86) Internationale Anmeldenummer: PCT/EP2001/010865
(87) Internationale Veröffentlichungsnummer: WO 2002/046111

(56) Entgegenhaltungen:
- DE-U- 29 916 216
- FR-A- 2 782 509
- GB-A- 2 331 096
- US-A- 1 911 119

## Beschreibung

Die Erfindung betrifft eine Vorrichtung nach dem Oberbegriff des Anspruchs 1.

Bei einer bekannten Vorrichtung dieser Art (US 1 911 119 A, Fig.3 und 8) sind die Vorrichtungen zum Schließen und Öffnen der Vorformhälften und der Fertigformhälften in ähnlicher Weise ausgebildet. In jedem Fall werden die zweiten Zwischenglieder durch eine Kolbenstange einer Kolben-Zylinder-Einheit hin und her angetrieben. Die beiden Kolben-Zylinder-Einheiten sind im Inneren des Gestells (Box) der I.S. (Individual Section)-Glasformmaschine angeordnet. Auf diese Weise verbrauchen die beiden Kolben-Zylinder-Einheiten viel wertvollen Platz innerhalb des Gestells. Außerdem ist die Linearbewegung jeder Kolbenstange für die Bedürfnisse der heutigen Hohlglasproduktion nicht mehr präzise und reproduzierbar genug.

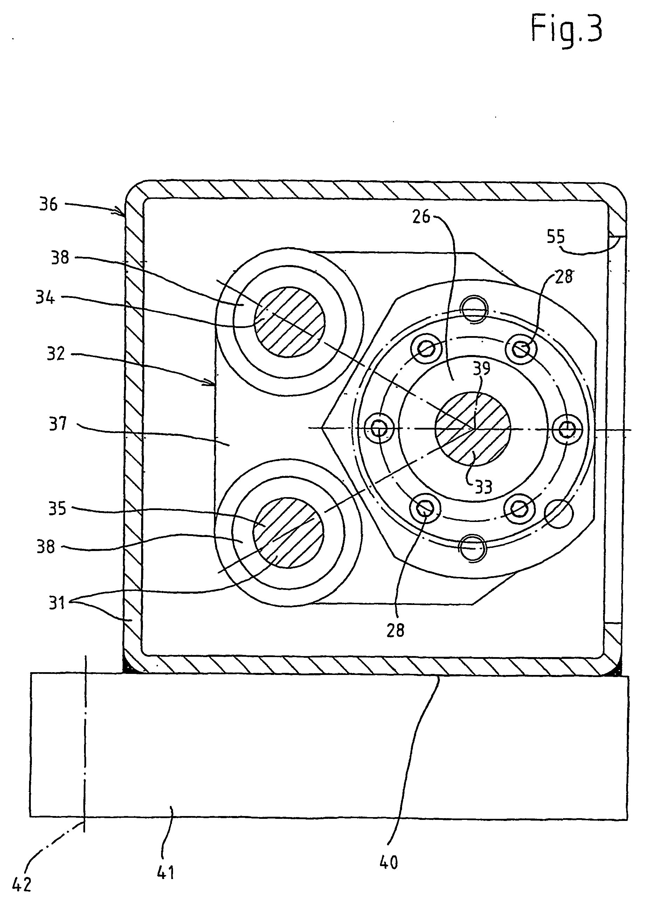

Aus der DE 198 51 133 A1 ist eine Parallelschließvorrichtung für Formhälften an sich bekannt. Ein Servomotor ist mit senkrechter Längsachse angeordnet und treibt mit seiner oben angeordneten Abtriebswelle über eine Kupplung eine Leitspindel, die unten Linksgewinde und oben Rechtsgewinde aufweist. Mit diesen gegensätzlichen Gewinden steht jeweils eine linksgängige und eine rechtsgängige Mutter im Eingriff. Die Muttern sind jeweils über ein Gelenkhebelpaar mit einer gemeinsamen waagerechten Schwenkwelle verbunden. Die Schwenkwelle mitsamt den Formhälftenträgem wird bei Drehung der Leitspindel in einer waagerechten Ebene hin- oder herbewegt. Fig. 3 verdeutlicht die geschlossene Formstellung, während Fig. 4 die geöffnete Formstellung zeigt. Diese Ausbildung ist vergleichsweise aufwändig und beansprucht sowohl in waagerechter als auch in senkrechter Richtung verhältnismäßig viel Raum.

Aus der DE 299 16 216 U1 der Anmelderin ist es an sich bekannt, durch einen Antrieb eine Schnecke hin und her drehend anzutreiben. An diametral gegenüberliegenden Stellen stehen mit der Schnecke Zahnräder im Eingriff. Jedes Zahnrad ist an einer Welle befestigt, die eine Kurbel trägt. Jede Kurbel ist über ein besonderes Hebelgetriebe mit einem schwenkbaren Formwerkzeughälftenhalter verbunden.

Aus Fig. 3 und 4 der GB 2 331 096 A und Fig. 3 und 4 der FR 2 782 509 A1 ist jeweils eine Vorrichtung entsprechend Fig. 3 und 4 der zuvor schon diskutierten DE 198 51 133 A1 an sich bekannt.

Der Erfindung liegt die Aufgabe zugrunde, den Raumbedarf der Vorrichtung innerhalb des Gestells zu verringern und einen sehr präzisen und reproduzierbaren Antrieb der zweiten Zwischenglieder zu ermöglichen.

Diese Aufgabe ist durch die Merkmale des Anspruchs 1 gelöst. Man erhält auf diese Weise eine platzsparende und dennoch sehr präzise arbeitende Vorrichtung zum Schließen und Öffnen der Formhälften. Diese Vorrichtung ist insbesondere für einen Einsatz in I.S.-Glasformmaschinen geeignet.

Gemäß Anspruch 2 ergibt sich eine Vorrichtung von günstig geschachtelter Bauweise mit entsprechend hoher Platzersparnis.

Gemäß Anspruch 3 erhält man eine kompakte Lagereinheit, in die gemäß Anspruch 4 auch noch die Lagerung der Spindel integriert sein kann.

Durch die Merkmale des Anspruchs 5 ergibt sich eine besonders genaue Führung und Drehsicherung der Mutter.

Die Merkmale des Anspruchs 6 führen zu einer einfachen, aber sehr präzisen Führung und Drehsicherung der Mutter.

Gemäß Anspruch 7 nehmen das Lagergehäuse und die Führungsvorrichtung nur sehr wenig Raum in dem Gestell, z.B. in der Box einer I.S.-Glasformmaschine, ein.

Die Merkmale des Anspruchs 8 oder 9 gewährleisten einen sehr präzisen, programmierbar steuerbaren Antrieb.

Gemäß Anspruch 10 beansprucht die Vorrichtung besonders wenig Raum innerhalb des Gestells.

Gemäß Anspruch 11 ergibt sich ein kompakter Antriebsstrang mit der nötigen Bewegungsfreiheit im Bereich seiner Einführung in das Gestell. In diesem Bereich ist allerdings nur mit äußerst geringen Relativbewegungen zwischen dem Antriebsstrang und dem Gestell zu rechnen.

Die Ausbildung gemäß Anspruch 12 führt zu einer Platz sparenden und für den Elektroservomotor deshalb besonders günstigen Anordnung, weil bei seiner waagerechten Anordnung seine Lager am wenigsten belastet werden.

Diese und weitere Merkmale und Vorteile der Erfindung werden nachfolgend anhand der in den Zeichnungen dargestellten Ausführungsform näher erläutert. Es zeigt
Fig. 1 eine teilweise geschnittene Draufsicht auf eine Ausführungsform der Vorrichtung,
Fig. 2 die teilweise geschnittene Ansicht gemäß Linie II-II in Fig. 1 und
Fig. 3 die Schnittansicht nach Linie III-III in Fig. 1 in vergrößerter Darstellung.

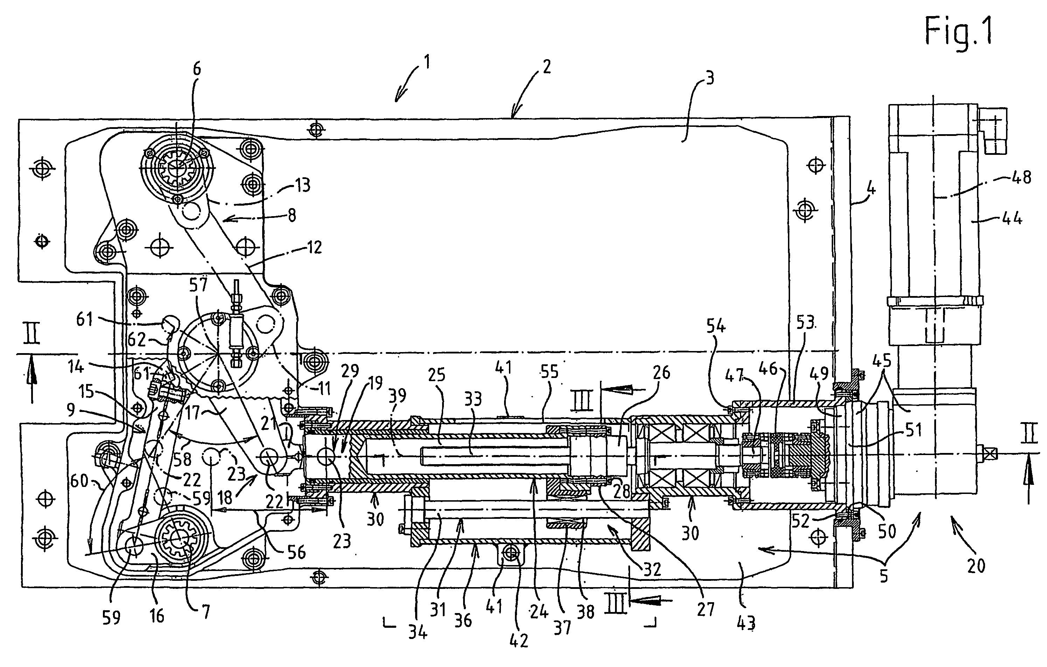

Fig. 1 zeigt einen Teil einer Glasformmaschine 1, in diesem Fall einer Sektion einer I.S.-Glasformmaschine. Die Glasformmaschine 1 weist ein Gestell (Box) 2 mit einem Innenraum 3 und einer Außenwand 4 auf.

Teilweise in dem Innenraum 3 und teilweise außerhalb des Gestells 2 ist eine Vorrichtung 5 zum Öffnen und Schließen von Formhälften wenigstens einer Form der Glasformmaschine 1 angeordnet. Die Formhälften, Formhälftenträger, Schamiersäule und ersten Zwischenglieder sind z.B. aus der US 1 911 119 A an sich bekannt und deshalb hier nicht erneut gezeichnet und beschrieben. In den vorliegenden Zeichnungen ist die Vorrichtung 5 für das Schließen und Öffnen von Fertigformhälften bestimmt. In ähnlicher Weise kann allerdings auch eine Vorrichtung zum Schließen und Öffnen von Vorformhälften der Galsformmaschine 1 ausgebildet sein.

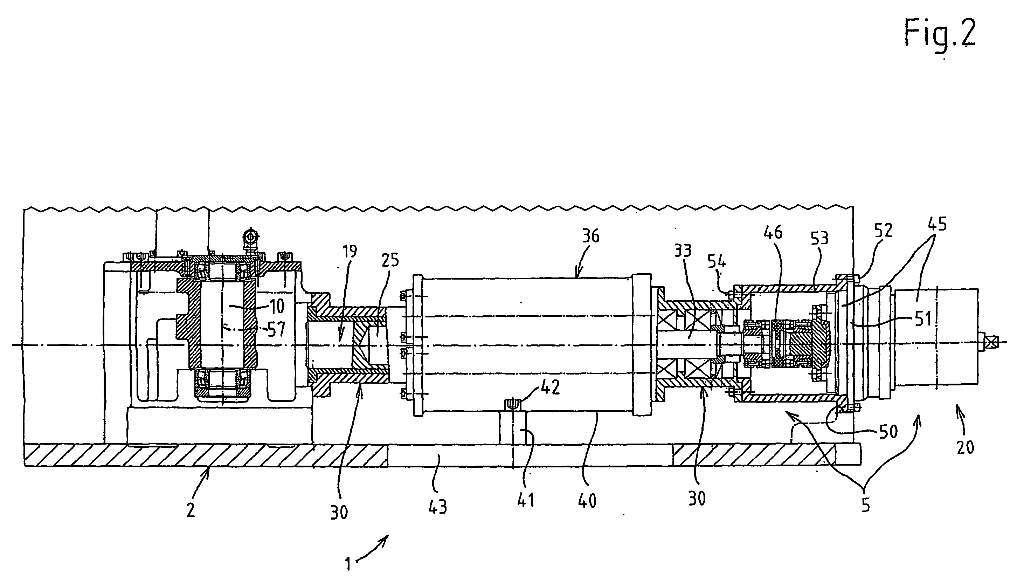

In dem Gestell 2 sind senkrechte Wellen 6 und 7 drehbar gelagert, die die erwähnten, aber nicht gezeichneten ersten Zwischenglieder antreiben. Jede Welle 6, 7 ist über ein Hebelwerk 8 und 9 mit einer gemeinsamen Antriebswelle 10 (Fig. 2) verbunden. Das Hebelwerk 8 besteht aus einem an der Antriebswelle 10 befestigten Arm 11, einem an dem Arm angelenkten Lenker 12 und einer an dem Lenker 12 angelenkten, an der Welle 6 befestigten Kurbel 13. In ähnlicher Weise besteht das Hebelwerk 9 aus einem an der Antriebswelle 10 befestigten Arm 14, einem an dem Arm 14 angelenkten Lenker 15 und einer an dem Lenker 15 angelenkten, an der Welle 7 befestigten Kurbel 16. An der Antriebswelle 10 ist außerdem ein Hebel 17 befestigt, der Bestandteil zweiter Zwischenglieder 18 zwischen der Antriebswelle 10 und einem Antriebselement 19 eines Antriebs 20 ist.

Zu den zweiten Zwischengliedern 18 gehört außer dem Hebel 17 eine Lasche 21, die einerseits durch einen Bolzen 22 an dem Hebel 17 und andererseits durch einen Bolzen 23 an dem Antriebselement 19 angelenkt ist. Das Antriebselement 19 ist durch den Antrieb 20 linear hin und her bewegbar. Das Antriebselement 19 weist an einer (in Fig. 1 rechten) ersten Seite 24 eine axiale Ausnehmung 25 auf, in die sich rechts ein Teil einer Mutter 26 erstreckt. Die Mutter 26 weist einen Ringflansch 27 auf, der mittels Schrauben 28 an dem Antriebselement 19 befestigt ist.

Eine von der ersten Seite 24 abgewandte zweite Seite 29 des Antriebselements 19 trägt den Bolzen 23 und ist in einem Lagergehäuse 30 axial verschiebbar gelagert. Das Lagergehäuse 30 umfasst auch einen stationären Teil 31 einer Führungsvorrichtung 32.

Durch die Mutter 26 hindurch erstreckt sich in die Ausnehmung 25 ein freies Ende einer Spindel 33, deren anderes Ende (rechts in Fig. 1) ebenfalls in dem Lagergehäuse 30 drehbar, aber axial festgelegt, gelagert ist.

Der stationäre Teil 31 der Führungsvorrichtung 32 weist zwei parallel zu der Spindel 33 angeordnete Führungsstangen 34 und 35 (siehe auch Fig. 3) auf, die in einem Zwischengehäuse 36 des Lagergehäuses 30 festgelegt sind. Ein an dem Antriebselement 19 festgelegter Fortsatz 37 ist mittels Kugelbüchsen 38 auf den Führungsstangen 34, 35 verschiebbar geführt. So ist das Antriebselement 19 zwar axial verschiebbar, aber wirksam und präzise gegen Drehung um die eigene Längsachse 39 gesichert.

An eine Unterseite 40 (Fig. 2 und 3) des Zwischengehäuses 36 ist ein Querriegel 41 angeschweißt, durch den eine Schraube 42 zur Fixierung des Lagergehäuses 30 in einen Boden 43 des Gestells 2 geschraubt ist.

So sind also das Lagergehäuse 30, das Antriebselement 19, die Spindel 33 und die Führungsvorrichtung 32 in dem Innenraum 3 des Gestells 2 Platz sparend angeordnet.

Der Antrieb 20 weist einen Elektroservomotor 44 auf, der über ein Winkelgetriebe 45 und eine Kupplung 46 mit einem Antriebszapfen 47 der Spindel 33 verbunden ist. Der Elektroservomotor 44 ist mit waagerechter und zu der Außenwand 4 paralleler Längsachse 48 außerhalb des Gestells 2 angeordnet. Ein als Planetenradgetriebe ausgebildeter Teil 49 des Winkelgetriebes 45 erstreckt sich von außerhalb des Gestells 2 in eine Durchbrechung 50 in der Außenwand 4 des Gestells 2. Der Getriebeteil 49 weist einen Außenflansch 51 auf, über den er mit Schrauben 52 mit einer Hülse 53 verschraubt ist. Die Hülse 53 ist ihrerseits durch Schrauben 54 mit dem in Fig. 1 rechten Ende des Lagergehäuses 30 verschraubt.

Der Elektroservomotor 44 und das Winkelgetriebe 45 sind schnell und leicht auf der Außenseite des Gestells 2 zugänglich. Auch die übrigen Teile der Vorrichtung 5 sind gut erreichbar. Dazu trägt auch ein seitliches Fenster 55 in dem Zwischengehäuse 36 bei.

In Fig. 1 sind in der unteren Hälfte alle Elemente mit voll ausgezogenen Linien in derjenigen Betriebsendstellung dargestellt, in welcher die zugehörigen Formhälften geschlossen sind. Dagegen sind in der oberen Hälfte der Fig. 1 die Elemente 11, 12, 13 und 6 in derjenigen Betriebsendstellung strichpunktiert eingezeichnet, in welcher die Formhälften voll geöffnet sind.

In der unteren Hälfte der Fig. 1 sind außerdem einige Elemente strichpunktiert in derjenigen Betriebsendstellung eingezeichnet, die der voll geöffneten Stellung der Formhälften entspricht. So wird durch Drehung der Spindel 33 der Bolzen 23 um einen Hub 56 in Fig. 1 nach links linear verschoben. Der Bolzen 22 wandert dabei auf einem Kreisbogen um eine Längsachse 57 der Antriebswelle 10 um einen Winkel 58. Dies führt dazu, dass sich ein Bolzen 59 zwischen der Kurbel 16 und dem Lenker 15 um einen Winkel 60 verlagert. Gleichzeitig schwenkt ein Bolzen 61 zwischen dem Arm 14 und dem Lenker 15 in Fig. 1 nach oben bis in die strickpunktierte Endstellung um einen Winkel 62.

Wegen der großen Übersetzung nach dem Elektroservomotor 44 kann die Zuhaltung der geschlossenen Formhälften mit vergleichsweise sehr geringem Drehmoment an der Ausgangswelle des Elektroservomotors 44 erfolgen.

Die Fig. 2 und 3 zeigen weitere Einzelheiten der Glasformmaschine 1 und der Vorrichtung 5.

## Patentansprüche

1. Vorrichtung (5) zum Schließen und Öffnen von Formhälften wenigstens einer Form einer Glasformmaschine (1),
wobei jede Formhälfte durch einen Formhälftenhalter gehalten ist,
wobei jeder Formhälftenhalter um eine senkrechte Schamiersäule hin und her schwenkbar durch eine in einem Gestell (2) der Glasformmaschine (1) drehbar gelagerte, senkrechte Welle (6;7) und erste Zwischenglieder antreibbar ist,
wobei jede Welle (6;7) über ein Hebelwerk (8;9) mit einer gemeinsamen Antriebswelle (10) verbunden ist,
und wobei die Antriebswelle (10) durch ein linear hin und her bewegbares Antriebselement (19) eines Antriebs (20) und zweite Zwischenglieder (18) hin und her schwenkbar ist,
**dadurch gekennzeichnet, dass** das Antriebselement (19) an einer Mutter (26) montiert und durch eine Führungsvorrichtung (32) vor Drehung um eine Längsachse (39) des Antriebselements (19) gesichert ist,
dass die Mutter (26) mit einer Spindel (33) im Eingriff steht,
und dass die Spindel (33) axial festgelegt drehbar gelagert und durch den Antrieb (20) hin und her drehend antreibbar ist.

2. Vorrichtung nach Anspruch 1,
**dadurch gekennzeichnet, dass** das Antriebselement (19) an einer an der Mutter (26) festgelegten ersten Seite (24) eine ein freies Ende der Spindel (33) aufnehmende Ausnehmung (25) aufweist,
und dass eine von der ersten Seite (24) abgewandte zweite Seite (29) des Antriebselement (19) mit den zweiten Zwischengliedern (18) gekuppelt ist.

3. Vorrichtung nach Anspruch 2,
**dadurch gekennzeichnet, dass** die zweite Seite (29) in einem an dem Gestell (2) abgestützten Lagergehäuse (30) axial verschiebbar gelagert ist.

4. Vorrichtung nach Anspruch 3,
**dadurch gekennzeichnet, dass** in dem Lagergehäuse (30) die Spindel (33) drehbar gelagert ist.

5. Vorrichtung nach Anspruch 3 oder 4,
**dadurch gekennzeichnet, dass** mit dem Lagergehäuse (30) ein stationärer Teil (31) der Führungsvorrichtung (32) verbunden ist.

6. Vorrichtung nach Anspruch 5,
**dadurch gekennzeichnet, dass** der stationäre Teil (31) wenigstens eine parallel zu der Spindel (33) angeordnete Führungsstange (34;35) aufweist,
und dass ein relativ zu der Mutter (26) festgelegter Fortsatz (37) der Führungsvorrichtung (32) auf der wenigstens einen Führungsstange (34;35) verschiebbar geführt ist.

7. Vorrichtung nach einem der Ansprüche 3 bis 6,
**dadurch gekennzeichnet, dass** das Lagergehäuse (30) in einem Innenraum (3) des Gestells (2) angeordnet ist.

8. Vorrichtung nach einem der Ansprüche 1 bis 7,
**dadurch gekennzeichnet, dass** der Antrieb (20) einen Elektroservomotor (44) aufweist.

9. Vorrichtung nach Anspruch 8,
**dadurch gekennzeichnet, dass** der Elektroservomotor (44) über ein Getriebe (45) und eine Kupplung (46) mit der Spindel (33) verbunden ist.

10. Vorrichtung nach Anspruch 9,
**dadurch gekennzeichnet, dass** der Elektroservomotor (44) mit waagerechter Längsachse (48) außerhalb des Gestells (2) angeordnet ist.

11. Vorrichtung nach Anspruch 9 oder 10,
**dadurch gekennzeichnet, dass** das Getriebe (45) von außerhalb des Gestells (2) in eine Durchbrechung (50) des Gestells (2) hineinragt und in der Durchbrechung (50) um seine Längsachse (39) drehbar und axial verschiebbar gelagert ist,
und dass ein Gehäuse des Getriebes (45) mit einer Hülse (53) und die Hülse (53) mit dem Lagergehäuse (30) verbunden sind.

12. Vorrichtung nach einem der Ansprüche 9 bis 11,
**dadurch gekennzeichnet, dass** das Getriebe (45) als Winkelgetriebe ausgebildet ist,
und dass eine Längsachse (48) des Elektroservomotors (44) parallel zu einer Außenwand (4) des Gestells (2) angeordnet ist.

## Claims

1. Device (5) for closing and opening mould halves of at least one mould of a glass moulding machine (1),
wherein each mould half is held by means of a mould half holding mechanism,
wherein each mould half holding mechanism can be driven so as to pivot in a reciprocating manner about a vertical hinge column by means of a vertical shaft (6; 7), which is mounted in a rotatable manner in a frame (2) of the glass moulding machine (1), and by means of first intermediate members,
wherein each shaft (6; 7) is connected via a lever mechanism (8; 9) to a common drive shaft (10),
and wherein the drive shaft (10) can be pivoted in a reciprocating manner by means of a drive element (19), which can be moved linearly in a reciprocating manner, of a drive (20) and by means of second intermediate members (18),
**characterised in that** the drive element (19) is mounted on a nut (26) and is secured against rotating about a longitudinal axis (39) of the drive element (19) by means of a guide device (32),
the nut (26) is in engagement with a spindle (33),
and the spindle (33) is mounted in an axially fixed, rotatable manner and can be driven rotationally in a reciprocating manner by means of the drive (20).

2. Device as claimed in claim 1,
**characterised in that** on a first side (24), which is fixed on the nut (26), the drive element (19) comprises an orifice (25) which accommodates a free end of the spindle (33),
and a second side (29) of the drive element (19) remote from the first side (24) is coupled to the second intermediate members (18).

3. Device as claimed in claim 2,
**characterised in that** the second side (29) is mounted in an axially displaceable manner in a bearing housing (30) supported on the frame (2).

4. Device as claimed in claim 3,
**characterised in that** the spindle (33) is mounted in a rotatable manner in the bearing housing (30).

5. Device as claimed in claim 3 or 4,
**characterised in that** a stationary part (31) of the guide device (32) is connected to the bearing housing (30).

6. Device as claimed in claim 5,
**characterised in that** the stationary part (31) comprises at least one guide rod (34; 35) which is disposed in parallel with the spindle (33),
and an extension (37) of the guide device (32) which is fixed relative to the nut (26) is guided in a displaceable manner on the at least one guide rod (34; 35).

7. Device as claimed in any one of claims 3 to 6,
**characterised in that** the bearing housing (30) is disposed in an internal space (3) in the frame (2).

8. Device as claimed in any one of claims 1 to 7,
**characterised in that** the drive (20) comprises an electro-servo motor (44).

9. Device as claimed in claim 8,
**characterised in that** the electro-servo motor (44) is connected via a transmission (45) and a coupling (46) to the spindle (33).

10. Device as claimed in claim 9,
**characterised in that** the electro-servo motor (44) is disposed with a horizontal longitudinal axis (48) outside the frame (2).

11. Device as claimed in claim 9 or 10,
**characterised in that** the transmission (45) protrudes from outside the frame (2) into an opening (50) in the frame (2) and is mounted in the opening (50) in such a manner as to be rotatable and axially displaceable about its longitudinal axis (39),
and a housing of the transmission (45) is connected to a sleeve (53) and the sleeve (53) is connected to the bearing housing (30).

12. Device as claimed in any one of claims 9 to 11,
**characterised in that** the transmission (45) is formed as an angular transmission,
and a longitudinal axis (48) of the electro-servo motor (44) is disposed in parallel with an external wall (4) of the frame (2).

## Revendications

1. Dispositif (5) pour la fermeture et l'ouverture de moitiés de moule d'au moins un moule d'une machine à mouler le verre (1),
dans lequel chaque moitié de moule est retenue par un support de moitié de moule,
dans lequel chaque support de moitié de moule peut être entraîné en pivotement en va-et-vient autour d'une colonne d'articulation verticale par un arbre (6 ; 7) vertical supporté avec possibilité de rotation dans un bâti (2) de la machine à mouler le verre (1) et par des premiers éléments intermédiaires,
dans lequel chaque arbre (6 ; 7) est relié par un ensemble de leviers (8 ; 9) à un arbre d'entraînement commun (10),
et dans lequel l'arbre d'entraînement (10) peut être entraîné en pivotement en va-et-vient par un élément d'entraînement (19) mobile en va-et-vient de façon linéaire d'un entraînement (20) et par des deuxièmes éléments intermédiaires (18),
**caractérisé en ce que** l'élément d'entraînement (19) est monté sur un écrou (26) et fixé par un dispositif de guidage (32) pour empêcher sa rotation autour d'un axe longitudinal (39) de l'élément d'entraînement (19),
**en ce que** l'écrou (26) est en prise avec une broche (33),
et **en ce que** la broche (33) est supportée avec possibilité de rotation et immobile dans le sens axial et peut être entraînée en rotation en va-et-vient par l'entraînement (20).

2. Dispositif selon la revendication 1, **caractérisé en ce que** l'élément d'entraînement (19) possède sur un premier côté (24) fixé sur l'écrou (26) un évidemment (25) recevant une extrémité libre de la broche (33), et **en ce que** le deuxième côté (29) de l'élément d'entraînement (19) opposé au premier côté (24) peut être couplé aux deuxièmes éléments intermédiaires (18).

3. Dispositif selon la revendication 2, **caractérisé en ce que** le deuxième côté (29) est supporté de manière coulissante dans le sens axial sur un corps de palier (30) appuyé sur le bâti (2).

4. Dispositif selon la revendication 3, **caractérisé en ce que** la broche (33) est supportée avec possibilité de rotation dans le corps de palier (30).

5. Dispositif selon la revendication 3 ou 4, **caractérisé en ce qu'**une partie stationnaire (31) du dispositif de guidage (32) est reliée au corps de palier (30).

6. Dispositif selon la revendication 5, **caractérisé en ce que** la partie stationnaire (31) possède au moins une tige de guidage (34 ; 35) disposée parallèlement à la broche (33), et **en ce qu'**une saillie (37) du dispositif de guidage (32) fixe par rapport à l'écrou (26) est guidée de façon coulissante sur la tige de guidage (34 ; 35) au nombre d'une au moins.

7. Dispositif selon l'une ou l'ensemble des revendications 3 à 6, **caractérisé en ce que** le corps de palier (30) est disposé dans l'espace intérieur (3) du bâti (2).

8. Dispositif selon l'une ou l'ensemble des revendications 1 à 7, **caractérisé en ce que** l'entraînement (20) comporte un servomoteur électrique (44).

9. Dispositif selon la revendication 8, **caractérisé en ce que** le servomoteur électrique (44) est relié à la broche (33) par un engrenage (45) et un accouplement (46).

10. Dispositif selon la revendication 9, **caractérisé en ce que** le servomoteur électrique (44) est disposé avec son axe longitudinal (48) horizontal à l'extérieur du bâti (2).

11. Dispositif selon la revendication 9 ou 10, **caractérisé en ce que** l'engrenage (45) pénètre depuis l'extérieur du bâti (2) dans une ouverture (50) du bâti (2) et est supporté dans l'ouverture (50) avec possibilité de rotation autour de son axe longitudinal (39) et de déplacement axial, et **en ce que** le carter de l'engrenage (45) est relié à une douille (53) et la douille (53) au corps de palier (30).

12. Dispositif selon l'une ou l'ensemble des revendications 9 à 11, **caractérisé en ce que** l'engrenage (45) est conformé comme un engrenage angulaire, et **en ce qu'**un axe longitudinal (48) du servomoteur électrique (44) est disposé parallèlement à une paroi extérieure (4) du bâti (2).
